(19) Europäisches Patentamt
European Patent Office
Office européen des brevets

(11) EP 2 256 761 A1

(12) **EUROPEAN PATENT APPLICATION**
published in accordance with Art. 153(4) EPC

(43) Date of publication:
**01.12.2010 Bulletin 2010/48**

(21) Application number: **09711771.7**

(22) Date of filing: **19.02.2009**

(51) Int Cl.:
***H01G 7/02*** *(2006.01)* ***C08F 16/32*** *(2006.01)*

(86) International application number:
**PCT/JP2009/052932**

(87) International publication number:
**WO 2009/104699 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.02.2008 JP 2008041379**

(71) Applicant: **Asahi Glass Company, Limited**
**Chiyoda-ku**
**Tokyo 100-8405 (JP)**

(72) Inventor: **KASHIWAGI, Kimiaki**
**Tokyo 100-8405 (JP)**

(74) Representative: **Müller-Boré & Partner**
**Patentanwälte**
**Grafinger Straße 2**
**81671 München (DE)**

# (54) ELECTRET AND ELECTROSTATIC INDUCTION CONVERSION DEVICE

(57) To provide an electret excellent in thermal stability of electric charge, and an electrostatic induction conversion device comprising such an electret.

An electret containing any one of a fluoropolymer which comprises at least one repeating unit selected from the group consisting of a repeating unit (a), a repeating unit (b) and a repeating unit (c), in a total amount of at least 80 mol%, and which has a glass transition temperature of from 110 to 350°C; a fluoropolymer which comprises at least one repeating unit selected from the group consisting of a repeating unit (a1), a repeating unit (b) and a repeating unit (c), in a total amount of at least 80 mol%; and a fluoropolymer which comprises a repeating unit (a2), and a repeating unit (b) and/or a repeating unit (c) wherein the total amount of the repeating unit (b) and the repeating unit (c) is at least 2 mol%. An electrostatic induction conversion element comprising such an electret.

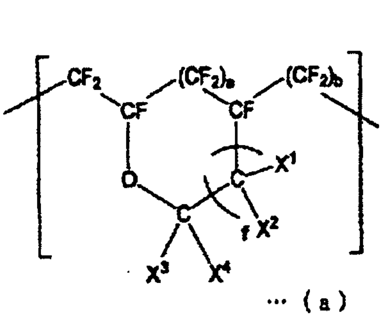
··· (a)

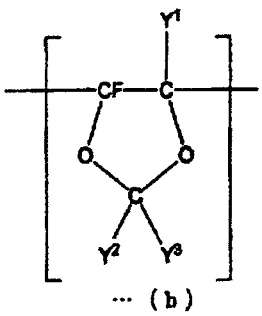
··· (b)

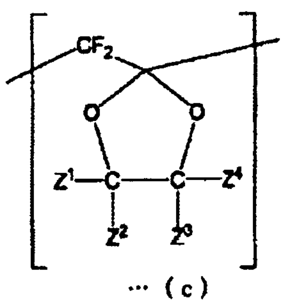
··· (c)

EP 2 256 761 A1

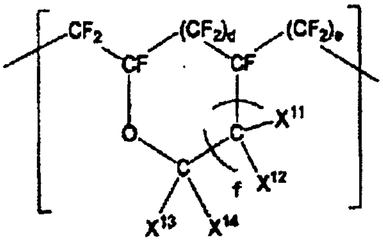

… (a 1)

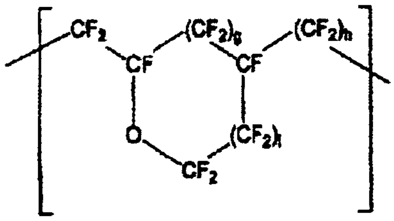

… (a 2)

Fig. 1

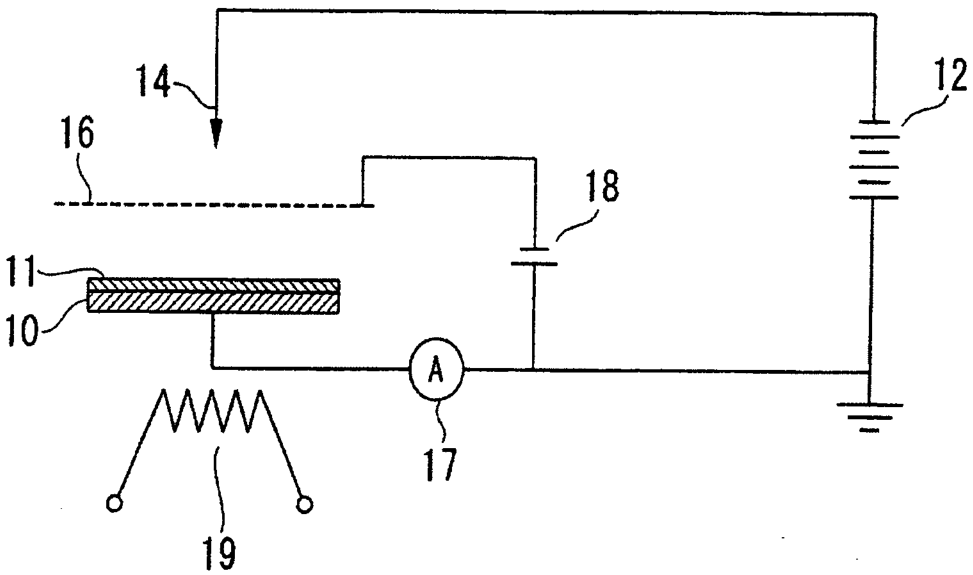

## Description

TECHNICAL FIELD

The present invention relates to an electret and an electrostatic induction conversion device comprising such an electret.

BACKGROUND ART

Heretofore, an electrostatic induction conversion device such as a power-generating unit or a microphone has been proposed wherein electret having an electric charge injected to an insulating material, is used.
As the material for such an electret, it has been common to use a linear fluororesin such as polytetrafluoroethylene. Further, recently, it has been proposed to use a polymer having a fluoroalicyclic structure in its main chain, as the material for such an electret (e.g. Patent Document 1).
Patent Document 1: JP-A-2006-180450

DISCLOSURE OF THE INVENTION

OBJECT TO BE ACCOMPLISHED BY THE INVENTION

However, a conventional electret has a problem such that the thermal stability of the injected electric charge is insufficient, and the charge retention performance at a high temperature is low. Such a problem is likely to be a cause for e.g. deterioration of the properties of an electrostatic induction conversion device wherein such an electret is used, and thus, an improvement to overcome such a problem has been desired.
The present invention has been made in view of such a conventional problem, and it is an object of the present invention to provide an electret excellent in the thermal stability of electric charge and an electrostatic induction conversion device comprising such an electret.

MEANS TO ACCOMPLISH THE OBJECT

The present invention provides an electret and an electrostatic induction conversion device, having the following constructions.

[1] An electret containing a fluoropolymer which comprises at least one repeating unit selected from the group consisting of a repeating unit represented by the following formula (a), a repeating unit represented by the following formula (b) and a repeating unit represented by the following formula (c), in a total amount of at least 80 mol% based on all repeating units, and which has a glass transition temperature of from 110 to 350°C.
[2] An electret containing a fluoropolymer which comprises at least one repeating unit selected from the group consisting of a repeating unit represented by the following formula (a1), a repeating unit represented by the following formula (b) and a repeating unit represented by the following formula (c), in a total amount of at least 80 mol% based on all repeating units.
[3] An electret containing a fluoropolymer which comprises a repeating unit represented by the following formula (a2), and a repeating unit represented by the following formula (b) and/or a repeating unit represented by the following formula (c), wherein the total amount of the repeating unit represented by the formula (b) and the repeating unit represented by the formula (c) is at least 2 mol% based on all repeating units.
[4] The electret according to the above [1], wherein the fluoropolymer is a copolymer comprising the repeating unit (a) and the repeating unit (b), wherein in the unit (a), each of $X^1$ to $X^4$ is a fluorine atom, and in the unit (b), $Y^1$ is a fluorine atom and each of $Y^2$ and $Y^3$ is a trifluoromethyl group.
[5] The electret according to the above [2], wherein the fluoropolymer is a polymer containing only the repeating unit represented by the formula (a1).
[6] The electret according to the above [5], wherein the fluoropolymer is such that in the formula (a1), each of $X^{11}$ and $X^{12}$ is a fluorine atom, and each of $X^{13}$ and $X^{14}$ is a chlorine atom, or each of $X^{11}$, $X^{12}$ and $X^{13}$ is a fluorine atom and $X^{14}$ is a chlorine atom.
[7] The electret according to the above [5], wherein the fluoropolymer is such that in the formula (a1), $X^{11}$ is a fluorine atom, $X^{12}$ is a trifluoromethyl group and each of $X^{13}$ and $X^{14}$ is a fluorine atom, or each of $X^{11}$, $X^{12}$ and $X^{13}$ is a fluorine atom and $X^{14}$ is a trifluoromethyl group.
[8] The electret according to the above [3], wherein the fluoropolymer is a copolymer comprising the repeating unit represented by the formula (a2) and the repeating unit represented by the formula (b).

[9] The electret according to any one of the above [1] to [8], which is a coating film.
[10] An electrostatic induction conversion device comprising the electret as defined in any one of the above [1] to [9].

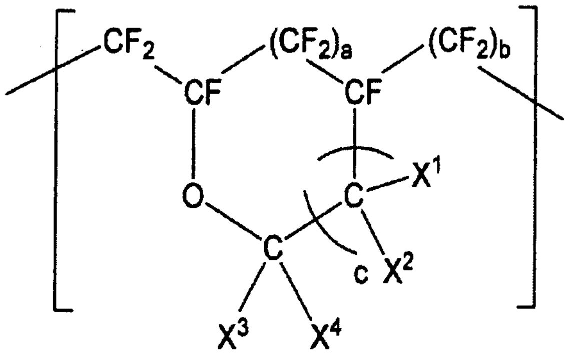

··· ( a )

wherein each of $X^1$ to $X^4$ which are independent of one another, is a fluorine atom, a chlorine atom, a fluorinated alkyl group or a fluorinated alkoxy group; one of a and b is 0 and the other is 1; and c is an integer of from 0 to 3; provided that when $X^1$ and $X^2$ are, respectively, present in plurality, such a plurality of $X^1$ and a plurality of $X^2$ may, respectively, be the same or different;

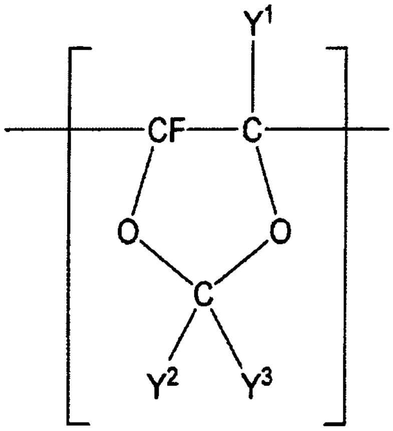

··· ( b )

wherein each of $Y^1$ to $Y^3$ which are independent of one another, is a fluorine atom, a chlorine atom, a fluorinated alkyl group or a fluorinated alkoxy group, provided that $Y^2$ and $Y^3$ may be bonded to each other to form a fluorinated alicyclic ring;

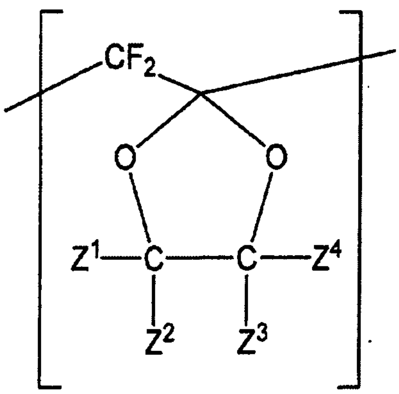

··· ( c )

wherein each of $Z^1$ to $Z^4$ which are independent of one another, is a fluorine atom, a chlorine atom, a fluorinated alkyl group or a fluorinated alkoxy group.

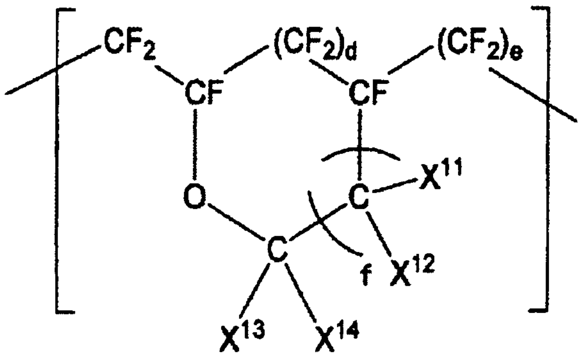

… (a 1)

wherein each of $X^{11}$ to $X^{14}$ which are independent of one another, is a fluorine atom, a chlorine atom, a fluorinated alkyl group or a fluorinated alkoxy group, provided that at least one of $X^{11}$ to $X^{14}$ is a chlorine atom, a fluorinated alkyl group or a fluorinated alkoxy group; one of d and e is 0 and the other is 1; and f is an integer of from 0 to 3; provided that when $X^{11}$ and $X^{12}$ are, respectively, present in plurality, such a plurality of $X^{11}$ and a plurality of $X^{12}$ may, respectively, be the same or different.

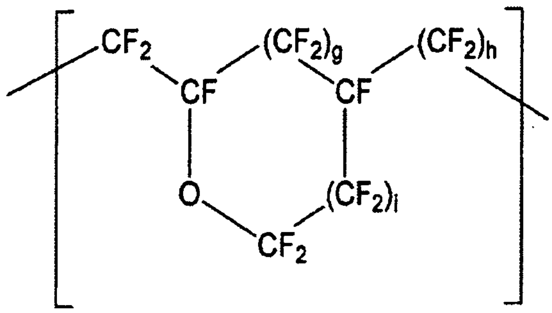

… (a 2)

wherein one of g and h is 0 and the other is 1; and i is an integer of from 0 to 3.

## ADVANTAGEOUS EFFECTS OF THE INVENTION

According to the present invention, it is possible to provide an electret excellent in thermal stability of electric charge and an electrostatic induction conversion device comprising such an electret.

## BRIEF DESCRIPTION OF THE DRAWINGS

Fig. 1 is a schematic diagram illustrating a corona charging equipment used for injection of electric charge.
Fig. 2 is a diagram showing set positions for measuring points for surface potentials.
Fig. 3 is a schematic view illustrating an equipment used for a thermal stability test.

## MEANINGS OF SYMBOLS

10: copper substrate, 11: coating film, 12: DC high-voltage power source, 14: corona needle, 16: grid, 17: ammeter, 18: power source for grid, 19: hot plate, 20: counter-electrode, 21: electret, 22: ammeter

BEST MODE FOR CARRYING OUT THE INVENTION

Now, the present invention will be described in further detail. In the following specification, "repeating units" constituting the polymer may be referred to simply as "units".
Further, a unit represented by the formula (a) may be referred to also as "a unit (a)". A unit, compound or the like represented by another formula will be referred to in a similar manner, and for example, a monomer represented by the formula (1) may be referred to also as "a monomer (1)".

<Electret>

The electret of the present invention contains any one fluoropolymer among the following fluoropolymers (I) to (III).
Fluoropolymer (I): A fluoropolymer which comprises at least one repeating unit selected from the group consisting of a unit (a), a unit (b) and a unit (c), in a total amount of at least 80 mol% based on all repeating units, and which has a glass transition temperature of from 110 to 350°C.
Fluoropolymer (II): A fluoropolymer which comprises at least one repeating unit selected from the group consisting of a unit (a1), a unit (b) and a unit (c), in a total amount of at least 80 mol% based on all repeating units.
Fluoropolymer (III): A fluoropolymer which comprises a unit (a2), and a unit (b) and/or a unit (c), wherein the total amount of the units (b) and (c) is at least 2 mol% based on all repeating units.
Each of these fluoropolymers is an amorphous perfluoropolymer and is soluble in an aprotic fluorine-containing solvent.
Here, "soluble" means that it can be made a solution having a concentration of at least 5% under a condition of 25°C.

[Fluoropolymer (I)]

The unit (a) is represented by the above formula (a).
The fluorinated alkyl group for each of $X^1$ to $X^4$ in the formula (a) is preferably a $C_{1-8}$ fluorinated alkyl group, more preferably a $C_{1-3}$ fluorinated alkyl group.
Such a fluorinated alkyl group may be linear or branched, preferably linear.
Further, such a fluorinated alkyl group may be one having all of hydrogen atoms of an alkyl group fluorinated (i.e. a perfluoroalkyl group) or one having some of hydrogen atoms of an alkyl group fluorinated, but a perfluoroalkyl group is preferred.
As such a fluorinated alkyl group, a trifluoromethyl group, a pentafluoroethyl group or a heptafluoropropyl group is preferred, and a trifluoromethyl group is particularly preferred.
The fluorinated alkoxy group for each of $X^1$ to $X^4$ may be one having an oxygen atom (-O-) bonded to the above-described fluorinated alkyl group.
One of a and b is 0, and the other is 1.
c is an integer of from 0 to 3, preferably 0 or 1, most preferably 1.
In a case where c is 2 or 3, $X^1$ and $X^2$ are, respectively, present in plurality in the unit (a).
In such a case, a plurality of $X^1$ and a plurality of $X^2$ may, respectively, be the same or different.
In the present invention, it is preferred that a unit (a1) represented by the above formula (a1) is contained as the unit (a).
In the formula (a1), each of $X^{11}$ to $X^{14}$ which are independent of one another, is a fluorine atom, a chlorine atom, a fluorinated alkyl group or a fluorinated alkoxy group, provided that at least one of $X^{11}$ to $X^{14}$ is a chlorine atom, a fluorinated alkyl group or a fluorinated alkoxy group.
The fluorinated alkyl group or the fluorinated alkoxy group for each of $X^{11}$ to $X^{14}$ may, respectively, be the same one as mentioned above as the fluorinated alkyl group or the fluorinated alkoxy group for each of the above $X^1$ to $X^4$.
In the formula (a1), one of d and e is 0, and the other is 1.
f is an integer of from 0 to 3, preferably 0 or 1, most preferably 1.
The unit (a1) is preferably one wherein any one or two among $X^{11}$ to $X^{14}$ are chlorine atoms, fluorinated alkyl groups or fluorinated alkoxy groups.
Particularly preferred is one wherein $X^{11}$ and $X^{12}$ are fluorine atoms, and either one or two of $X^{13}$ and $X^{14}$ are chlorine atoms or fluorinated alkyl groups, or one wherein either one or two of $X^{11}$ and $X^{12}$ are fluorinated alkyl groups or fluorinated alkoxy groups, and $X^{13}$ and $X^{14}$ are fluorine atoms. As such a fluorinated alkyl group, a trifluoromethyl group is particularly preferred.
The unit (a1) is a unit which is formed by cyclopolymerization of a fluoromonomer having two polymerizable double bonds at its terminals, as shown in the following formula (1). Specifically, the following compounds (1-1) to (1-6)

may specifically be mentioned as such fluoromonomers.

In the formula (1), $X^{11}$ to $X^{14}$ and f are, respectively, as defined above.

In the formulae (1-1) to (1-6), n is an integer of from 1 to 3, most preferably 1.

$$CF_2=CF-(C(X^{11})(X^{12}))_f-C(X^{13})(X^{14})-O-CF=CF_2 \quad (1)$$

$$CF_2=CF(CF_2)_nCFClOCF=CF_2 \quad (1\text{-}1)$$

$$CF_2=CF(CF_2)_nCCl_2OCF=CF_2 \quad (1\text{-}2)$$

$$CF_2=CF(CF_2)_nCF(CF_3)OCF=CF_2 \quad (1\text{-}3)$$

$$CF_2=CF(CF_2)_nC(CF_3)_2OCF=CF_2 \quad (1\text{-}4)$$

$$CF_2=CF(CF_2)_{n-1}CF(CF_3)CF_2OCF=CF_2 \quad (1\text{-}5)$$

$$CF_2=CF(CF_2)_{n-1}CF(OCF_3)CF_2OCF=CF_2 \quad (1\text{-}6)$$

As the unit (a1), the following units (a1-1) to (a1-5) are particularly preferred. In each formula, d and e are as defined above.

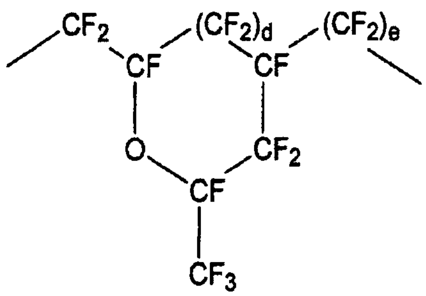

(a1-1)

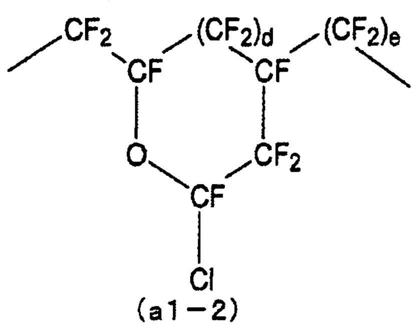

(a1-2)

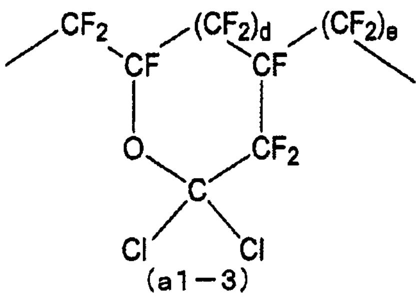

(a1-3)

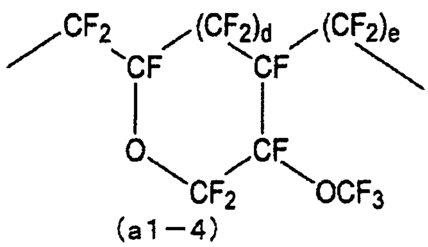

(a1-4)

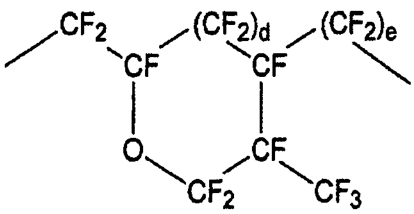

(a1-5)

It is also preferred that the fluorocopolymer (I) contains a unit (a2) represented by the above formula (a2) as

the unit (a). However, in a case where in the present invention, the fluoropolymer (I) contains the unit (a2), at least one among the unit (a1), the unit (b) and the unit (c) is used in combination.

In the formula (a2), one of g and h is 0, and the other is 1.

i is an integer of from 0 to 3, preferably 0 or 1, most preferably 1. That is, as the unit (a2), the following unit (a2-1) or (a2-2) is preferred.

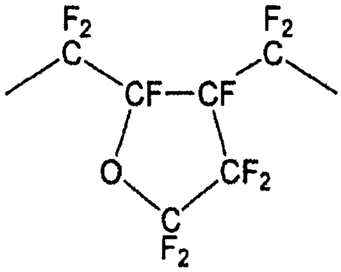

(a2-1)

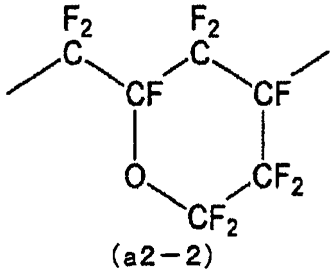

(a2-2)

The fluoropolymer (I) may contain any one, or two or more, among the above-mentioned units, as the unit (a).

The unit (b) is represented by the above formula (b).

The fluorinated alkyl group or the fluorinated alkoxy group for each of $Y^1$ to $Y^3$ in the formula (b) may be the same one as mentioned as the fluorinated alkyl group or the fluorinated alkoxy group for each of the above $X^1$ to $X^4$.

The unit (b) is preferably one wherein any one or two among $Y^1$ to $Y^3$ are fluorine atoms, and the remaining two or one is a fluorinated alkyl group or a fluorinated alkoxy group.

Among them, preferred is one wherein $Y^1$ is a fluorinated alkoxy group, and each of $Y^2$ and $Y^3$ is a fluorine atom, or one wherein $Y^1$ is a fluorine atom, and each of $Y^2$ and $Y^3$ is a fluorinated alkyl group. As such a fluorinated alkoxy group, a trifluoromethoxy group is particularly preferred. As such a fluorinated alkyl group, a trifluoromethyl group is particularly preferred. As its specific examples, the following units (b-1) and (b-2) may, for example, be mentioned.

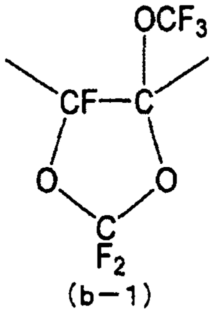

(b-1)

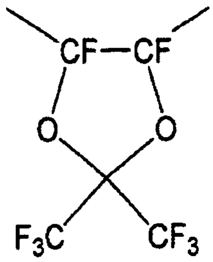

(b-2)

In the unit (b), $Y^2$ and $Y^3$ may be bonded to each other to form a fluorinated alicyclic ring together with the carbon atom to which $Y^2$ and $Y^3$ are bonded.

Such a fluorinated alicyclic ring is preferably a 4- to 6-membered ring.

The fluorinated alicyclic ring is preferably a saturated alicyclic ring.

Such a fluorinated alicyclic ring may have an etheric oxygen atom (-O-) in its ring structure. In such a case, the number of etheric oxygen atoms in the fluorinated alicyclic ring is preferably 1 or 2.

The following units (b-3) and (b-4) may, for example, be mentioned as specific examples of the unit (b) wherein $Y^2$ and $Y^3$ together form a fluorinated alicyclic ring.

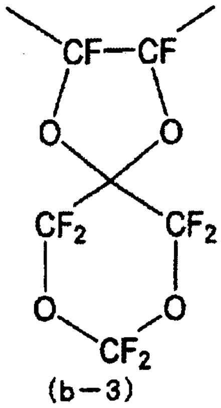
(b−3)

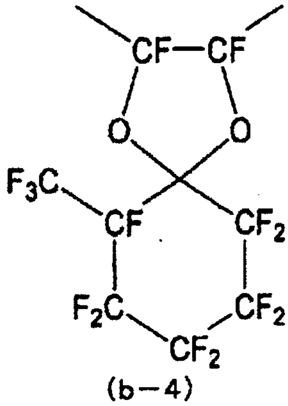
(b−4)

The unit (b) may, for example, be formed by polymerizing a perfluoro(1,3-dioxole) such as perfluoro(2,2-dimethyl-1,3-dioxole), perfluoro(1,3-dioxole) or perfluoro(4-methoxy-1,3-dioxole).

The fluoropolymer (I) may contain any one, or two or more, among the above-described units, as the unit (b).

The unit (c) is represented by the above formula (c).

In the formula (c), each of $Z^1$ to $Z^4$ which are independent of one another, is a fluorine atom, a chlorine atom, a fluorinated alkyl group or a fluorinated alkoxy group.

The fluorinated alkyl group or the fluorinated alkoxy group for each of $Z^1$ to $Z^4$ may be the same one as mentioned as the fluorinated alkyl group or the fluorinated alkoxy group for each of the above $X^1$ to $X^4$.

The unit (c) is preferably one wherein any one or two among $Z^1$ to $Z^4$ are fluorinated alkyl groups or fluorinated alkoxy groups, and the remaining three or two are fluorine atoms.

Among them, preferred is one wherein, as shown by the following unit (c-1), any one of $Z^1$ to $Z^4$ is a fluorinated alkyl group, and the remaining three are fluorine atoms. The fluorinated alkyl group is preferably a trifluoromethyl group, a pentafluoroethyl group or a heptafluoropropyl group, particularly preferably a trifluoromethyl group.

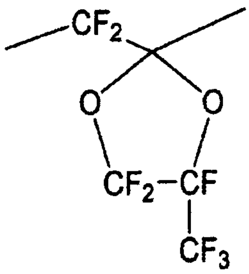
(c−1)

The unit (c) may, for example, be formed by polymerizing a perfluoro(2-methylene-1,3-dioxolane) such as perfluoro(2-methylene-4-methyl-1,3-dioxolane) or perfluoro(2-methylene-4-propyl-1,3-dioxolane).

The fluoropolymer (I) may contain any one, or two or more, among the above-described units, as the unit (c).

The fluorocopolymer (I) may contain another repeating unit (hereinafter referred to as a unit (d)) other than the units (a) to (c) within a range not to impair the effects of the present invention.

The unit (d) is not particularly limited, so long as it is one based on a monomer copolymerizable with monomers for the units (a) to (c). As such a monomer, preferred may be a fluoroolefin such as tetrafluoroethylene, chlorotrifluoroethylene or vinylidene fluoride.

In the fluoropolymer (I), the total amount of the units (a) to (c) is at least 80 mol%, preferably at least 90 mol%, particularly preferably 100 mol%, based on the sum of all repeating units constituting the fluoropolymer. If such a total amount is less than 80 mol%, the effects of the present invention cannot sufficiently be obtained.

The repeating units contained in the fluorocopolymer (I) may be any one, or two or more, among the units (a) to (c) and may be suitably determined in consideration of the desired glass transition temperature, film-forming property, solubility in solvents, etc.

Preferred as the fluorocopolymer (I) may, for example, be a fluoropolymer comprising at least one repeating unit selected from the group consisting of the unit (a1), the unit (b) and the unit (c) (hereinafter referred to as a fluoropolymer

(I-1)), or a fluoropolymer comprising the unit (a2), and the unit (b) and/or the unit (c) (hereinafter referred to as a fluoropolymer (I-2)).

Combinations of the respective units in the fluoropolymer (I-1) may, for example, be those disclosed in WO05/054336, WO03/037838, WO01/92194, JP-A-2003-40938, JP-A-2001-302725, JP-A-4-346957, JP-A-4-346989, U.S. Patent 5,260,492, U.S. Patent 5,326,917, U.S. Patent 5,350,821 and JP-A-43-29154.

As the fluoropolymer (I-1), the after-mentioned fluoropolymer (II) is particularly preferred.

Combinations of the respective units in the fluoropolymer (I-2) may, for example, be those disclosed in Japanese Patent No. 3,053,657.

As the fluoropolymer (I-2), the after-mentioned fluoropolymer (III) is particularly preferred.

The glass transition temperature of the fluoropolymer (I) is from 110 to 350°C, preferably from 110 to 250°C, more preferably from 120 to 200°C. When the glass transition temperature is at least the lower limit value within the above range, the effects of the present invention will be improved, and when it is at most the upper limit value, the film-forming property at the time of forming the polymer into a film, or the solubility of the polymer in a solvent, will be improved.

The glass transition temperature of the fluoropolymer (I) can be adjusted by adjusting the types or proportions of the repeating units constituting the fluoropolymer (I).

For example, by increasing the proportion of the above units (a), (b) and (c) in the polymer, it is possible to improve the glass transition temperature of the polymer, and it is most preferred to increase the proportion of the unit (b) in order to improve the glass transition temperature.

[Fluoropolymer (II)]

The fluoropolymer (II) is a fluoropolymer which comprises at least one repeating unit selected from the group consisting of the above unit (a1), the above unit (b) and the above unit (c), in a total amount of at least 80 mol% based on all repeating units. The fluoropolymer (II) has a glass transition temperature of from 110 to 350°C, when it contains at least 80 mol% in total of the units (a1), (b) and (c).

Here, the units (a1), (b) and (c) contribute to the improvement of the glass transition temperature of the fluorocopolymer.

The unit (a1), the unit (b) and the unit (c) in the fluoropolymer (II) may, respectively, be the same ones as the unit (a1), the unit (b) and the unit (c) mentioned for the above fluoropolymer (I).

In the fluoropolymer (II), the total amount of the unit (a1), the unit (b) and the unit (c) is at least 80 mol%, preferably at least 90 mol%, particularly preferably 100 mol%, based on the sum of all repeating units constituting the fluoropolymer. If the total amount is less than 80 mol%, the effects of the present invention cannot sufficiently be obtained.

Repeating units contained in the fluorocopolymer (II) may be any one, or two or more, among the units (a1), (b) and (c). That is, the fluorocopolymer (II) may be one constituted by any one of the units (a1), (b) and (c), or one constituted by two or three of them. Otherwise, in addition to these units, the above-mentioned unit (d) may be contained within a range not to impair the effects of the present invention.

As the fluorocopolymer (II), a polymer containing at least the unit (a1) is preferred. Such a polymer may, for example, be a polymer constituted solely of the unit (a1), or a copolymer constituted by the unit (a1) and the unit (b) and/or the unit (c). Among them, a polymer constituted solely by the unit (a1) is preferred.

[Fluoropolymer (III)]

The fluoropolymer (III) is a fluoropolymer which comprises the above unit (a2), and the above unit (b) and/or unit (c), wherein the total amount of the units (b) and (c) is at least 2 mol%, based on all repeating units. The fluoropolymer (III) has a glass transition temperature of from 110 to 350°C, when it contains the units (b) and (c) in a total amount of at least 2 mol%.

The unit (a2), the unit (b) and the unit (c) in the fluoropolymer (III) may be the same ones as the unit (a2), the unit (b) and the unit (c) mentioned for the above fluoropolymer (I).

The fluoropolymer (III) contains the unit (a2) as an essential unit.

In the fluoropolymer (III), the proportion of the unit (a2) is preferably at least 10 mol%, more preferably at least 30 mol%, based on the sum of all repeating units constituting the fluoropolymer. When the proportion of the unit (a2) is at least 10 mol%, particularly at least 30 mol%, the properties as an electret, and the solubility of the fluoropolymer in a solvent will be improved.

Further, the upper limit of the proportion of the unit (a2) may suitably be determined in consideration of the proportion of the unit (b) and/or the unit (c). Preferably, the total amount of the unit (a2), the unit (b) and the unit (c) is at least 80 mol%, more preferably at least 90 mol%, more preferably 100 mol%, based on the sum of all repeating units constituting the fluoropolymer.

Further, the fluoropolymer (III) contains one or both of the unit (b) and the unit (c) as essential units.

In the fluoropolymer (III), the total amount of the unit (b) and the unit (c) is at least 2 mol%, preferably at least 10 mol%, more preferably at least 30 mol%, based on the sum of all repeating units constituting the fluoropolymer. If the total amount is less than 2 mol%, the effects of the present invention cannot sufficiently be obtained. Further, the upper limit of the total amount is preferably at most 80 mol%, more preferably at most 60 mol%, in consideration of the balance with the unit (a2).

The above unit (a2) contributes to lowering of the glass transition temperature of the fluorocopolymer (III). For example, in the case of a homopolymer of the unit (a2), its glass transition temperature will be lower than 110°C. Therefore, the smaller the proportion of the unit (a2), the higher the glass transition temperature. In order to bring the glass transition temperature of the fluorocopolymer (III) to be at least 110°C, the proportion of the unit (a2) is preferably at most 98 mol%, more preferably at most 90 mol%.

Repeating units contained in the fluoropolymer (III) may be any one, or two or more, among the units (b) and (c). That is, the fluoropolymer (III) may be one containing the units (a2) and (b) as essential units, one containing the units (a2) and (c) as essential units, or one containing all of the units (a2), (b) and (c) as essential units. Further, in addition to these units, the above-mentioned unit (d) may be contained within a range not to impair the effects of the present invention.

The fluoropolymer (III) is preferably a copolymer containing at least the unit (a2) and the unit (b). Such a polymer may, for example, be a polymer constituted by the units (a2) and (b) or a copolymer constituted by the units (a2), (b) and (c).

Each of the above-described fluoropolymers (I) to (III) preferably has an acid group such as a carboxy group or a sulfonic group as a terminal group, whereby the properties as an electret and the adhesion to the substrate will be improved. As the acid group, a carboxy group is particularly preferred.

A fluoropolymer having an acid group as a terminal group can be obtained by a conventional method, such as a method wherein a fluoropolymer is subjected to high temperature treatment in the presence of oxygen to oxidatively decompose its side chain, followed by water treatment to form a carboxy group, or a method of carrying out polymerization in the presence of an initiator or a chain transfer agent having an acid group or its precursor group in its molecule.

Further, in a case where the fluoropolymer (I), (II) or (III) contains an acid group such as a carboxy group, as a terminal group, a silane compound may be bonded to such an acid group.

The silane compound may be bonded to the acid group by reacting the fluoropolymer having an acid group as a terminal group with a silane coupling agent which will be described hereinafter.

The fluoropolymers (I) to (III) can be produced, for example, by carrying out e.g. cyclopolymerization, homopolymerization or copolymerization of monomers for the respective units by applying a conventional method disclosed in e.g. JP-A-4-189880.

The molecular weights of the fluoropolymers (I) to (III) are preferably at a level of from 10,000 to 5,000,000, more preferably within a range of from 20,000 to 1,000,000 from the viewpoint of the solubility in a solvent or the film-forming property at the time of forming a film.

The electret of the present invention can be produced by dissolving any one of the above fluoropolymers (I) to (III) (which may hereinafter be referred to simply as "a fluoropolymer") in an aprotic fluorine-containing solvent to prepare a fluoropolymer composition, forming a coating film by using such a composition, and injecting electric charge to such a coating film.

The aprotic fluorine-containing solvent is not particularly limited so long as it is one capable of dissolving the above fluoropolymer.

The following fluoro compounds may be exemplified as preferred example of the aprotic fluorine-containing solvent.

A fluorinated aromatic compound such as perfluorobenzene, pentafluorobenzene, 1,3-bis(trifluoromethyl)benzene or 1,4-bis(trifluoromethyl)benzene; a perfluorotrialkylamine compound such as perfluorotributylamine or perfluorotripropylamine; a perfluorocycloalkane compound such as perfluorodecalin, perfluorocyclohexane or perfluoro(1,3,5-trimethylcyclohexane); a perfluorocyclic ether compound such as perfluoro(2-butyltetrahydrofuran); a low molecular weight perfluoropolyether; a perfluoroalkane such as perfluorohexane, perfluorooctane, perfluorodecane, perfluorododecane, perfluoro(2,7-dimethyloctane), perfluoro(1,2-dimethylhexane) or perfluoro(1,3-dimethylhexane); a chlorofluorocarbon such as 1,1,2-trichloro-1,2,2-trifluoroethane, 1,1,1-tricloro-2,2,2-trifluoroethane, 1,3-dichloro-1,1,2,2,3-pentafluoropropane, 1,1,1,3-tetrachloro-2,2,3,3-tetrafluoropropane or 1,1,3,4-tetrachloro-1,2,2,3,4,4-hexafluorobutane; a hydrofluorocarbon such as 1,1,1,2,2,3,3,5,5,5-decafluoropentane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,2,3,3,4,4,5,5,6,6,7,7,8,8,9,9,10,10-henicosafluorodecane, 1,1,1,2,2,3,3,4,4-nonafluorohexane, 1,1,1,2,2,3,3,4,4,5,5,6,6-tridecafluorooctane, 1,1,1,2,2,3,3,4,4,5,5,6,6,7,7,8,8-heptadecafluorodecane, 1,1,1,2,3,4,5,5,5-nonafluoro-4-(trifluoromethyl)pentane or 1,1,1,2,2,3,5,5,5-nonafluoro-4-(trifluoromethyl)pentane; and a hydrochlorofluorocarbon such as 3,3-dichloro-1,1,1,2,2-pentafluoropropane or 1,3-dichloro-1,1,2,2,3-pentafluoropropane.

Any one of these fluoro compounds may be used alone, or two or more of them may be used in combination.

Further, various aprotic fluorine-containing solvents may be used other than the above-mentioned ones.

For example, a fluorine-containing solvent such as a hydrofluoroether (HFE) is preferred. Such a fluorine-containing solvent is a fluorine-containing solvent represented by the formula $R^1$-O-$R^2$ wherein $R^1$ is a $C_{5-12}$ linear or branched polyfluoroalkyl group which may have an etheric oxygen atom, and $R^2$ is a $C_{1-5}$ linear or branched alkyl group or polyfluoroalkyl group (which may hereinafter be referred to as a fluorine-containing solvent (2)).

The polyfluoroalkyl group for $R^1$ is a group having at least two hydrogen atoms in an alkyl group substituted by fluorine atoms and includes a perfluoroalkyl group having all of hydrogen atoms in an alkyl group substituted by fluorine atoms, and a group having at least two hydrogen atoms in an alkyl group substituted by fluorine atoms and having at least one hydrogen atom in an alkyl group substituted by a halogen atom other than a fluorine atom. As the halogen atom other than a fluorine atom, a chlorine atom is preferred.

The polyfluoroalkyl group is preferably a group having at least 60%, more preferably at least 80%, in number of hydrogen atoms in the corresponding alkyl group substituted by fluorine atoms. A more preferred polyfluoroalkyl group is a perfluoroalkyl group.

In a case where $R^1$ has an etheric oxygen atom, if the number of etheric oxygen atoms is too large, the solubility will be impaired, and accordingly, the number of etheric oxygen atoms in $R^1$ is preferably from 1 to 3, more preferably 1 or 2.

When the number of carbon atoms in $R^1$ is at least 5, the solubility of a fluoropolymer is good, and when the number of carbon atoms in $R^1$ is at most 12, such a solvent is readily industrially available. Accordingly, the number of carbon atoms in $R^1$ is selected within a range of from 5 to 12. The number of carbon atoms in $R^1$ is preferably from 6 to 10, more preferably 6 or 7, or 9 or 10.

When the number of carbon atoms in $R^2$ is at most 5, the solubility of a fluoropolymer will be good. A preferred example of $R^2$ is a methyl group or an ethyl group.

If the molecular weight of the fluorine-containing solvent (2) is too large, not only the viscosity of the fluoropolymer composition is increased, but also the solubility of the fluoropolymer decreases, and therefore, it is preferably at most 1,000.

Further, the fluorine content in the fluorine-containing solvent (2) is preferably from 60 to 80 mass%, whereby the solubility of the fluoropolymer will be excellent.

The following ones may be exemplified as preferred examples of the fluorine-containing solvent (2).

$F(CF_2)_5OCH_3$, $F(CF_2)_6OCH_3$, $F(CF_2)_7OCH_3$, $F(CF_2)_8OCH_3$, $F(CF_2)_9OCH_3$, $F(CF_2)_{10}OCH_3$, $H(CF_2)_6OCH_3$, $(CF_3)_2CFCF(OCH_3)CF_2CF_3$,

$F(CF_2)_3OCF(CF_3)CF_2OCH_3$, $F(CF_2)_3OCF(CF_3)CF_2OCF(CF_3)CF_2OCH_3$, $F(CF_2)_8OCH_2CH_2CH_3$, $(CF_3)_2CFCF_2CF_2OCH_3$, and $F(CF_2)_2O(CF_2)_4OCH_2CH_3$.

Among these fluorine-containing solvents, $(CF_3)_2CFCF(OCH_3)CF_2CF_3$ is particularly preferred.

To the above fluoropolymer composition, a silane coupling agent may be incorporated, whereby the adhesion of a coating film formed by using such a fluoropolymer composition to the substrate will be improved.

The silane coupling agent is not particularly limited, and a wide range of silane coupling agents including known or well known agents may be used. The following ones may specifically be exemplified.

A monoalkoxysilane such as trimethylmethoxysilane, trimethylethoxysilane, dimethylvinylmethoxysilane or dimethylvinylethoxysilane.

A dialkoxysilane such as γ-chloropropylmethyldimethoxysilane, γ-chloropropylmethyldimethoxysilane, γ-aminopropylmethyidiethoxysilane, γ-aminopropylmethyldimethoxysilane, N-(β-aminoethyl)-γ-aminopropylmethyldimethoxysilane, N-(β-aminoethyl)-γ-aminopropylmethyldiethoxysilane, γ-glycidyloxypropylmethyldimethoxysilane, γ-glycidyloxypropylmethyldiethoxysilane, γ-methacyloyloxypropylmethyldimethoxysilane, methyldimethoxysilane, methyldiethoxysilane, dimethyldimethoxysilane, dimethyldiethoxysilane, methylvinyldimethoxysilane, methylvinyldiethoxysilane, diphenyldimethoxysilane, diphenyldiethoxysilane, 3,3,3-trifluoropropylmethyldimethoxysilane, 3,3,4,4,5,5,6,6,7,7,8,8,8-tridecafluorooctylmethyldimethoxysilane or 3,3,4,4,5,5,6,6,7,7,8,8,9,9,10,10,10-heptadecafluorodecylmethyldimethoxysilane.

A tri- or tetra-alkoxysilane such as γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane, γ-mercaptopropyltrimethoxysilane, γ-glycidyloxypropyltrimethoxysilane, γ-glycidyloxypropyltriethoxysilane, γ-methacryloyloxypropyltrimethoxysilane, γ-chloropropyltrimethoxysilane, methyltriethoxysilane, phenyltrimethoxysilane, phenyltriethoxysilane, 3,3,3-trifluoropropyltrimethoxysilane, 3,3,4,4,5,5,6,6,7,7,8,8,8-tridecafluorooctyltrimethoxysilane, 3,3,4,4,5,5,6,6,7,7,8,8,9,9,10,10,10-heptadecafluorodecyltrimethoxysilane, tetramethoxysilane or tetraethoxysilane.

Further, as a preferred silane coupling agent, an aromatic amine type silane coupling agent being a silane coupling agent having an aromatic amine structure may be mentioned. Compounds represented by the following formulae (s1) to (s3) may be mentioned as such aromatic amine type silane coupling agents.

$$ArSi(OR^1)(OR^2)(OR^3) \quad (s1)$$

$$ArSiR^4(OR^1)(OR^2) \quad (s2)$$

$ArSiR^4R^5(OR^1)$ (s3)

wherein each of $R^1$ to $R^5$ which are independent of one another, is a hydrogen atom, a $C_{1-20}$ alkyl group or an aryl group, and Ar is a p-, m- or o-aminophenyl group.

As specific examples of the compounds represented by the formulae (s1) to (s3), the following ones may be mentioned.

Aminophenyltrimethoxysilane, aminophenyltriethoxysilane, aminophenyltripropoxysilane, aminophenyltriisopropoxysilane, aminophenylmethyldimethoxysilane, aminophenylmethyldiethoxysilane, aminophenylmethyldipropoxysilane, aminophenylmethyldiisopropoxysilane, aminophenylphenyldimethoxysilane, aminophenylphenyldiethoxysilane, aminophenylphenyldipropoxysilane, aminophenyldiisopropoxysilane, etc.

A hydrogen atom of an amino group in these compounds may be substituted by an alkyl group or an aryl group. For example, N,N-dimethylaminophenyltrialkoxysilane or N,N-dimethylaminophenylmethyldialkoxysilane may, for example, be mentioned. In addition, for example, aromatic amine type silane coupling agents disclosed in U.S. Patent No. 3,481,815 may be used.

The above silane coupling agents may be used alone, or two or more of them may be used in combination.

Further, a partially hydrolyzed condensate of the above silane coupling agent may preferably be used.

Further, a co-partially hydrolyzed condensate of the above silane coupling agent with a tetraalkoxysilane such as tetramethoxysilane, tetraethoxysilane or tetrapropoxysilane, may also preferably be used. Among them, as one to improve the adhesion of the fluoropolymer without impairing the transparency of the fluoropolymer, a silane coupling agent having an amino group (such as γ-aminopropyltriethoxysilane, γ-aminoproplymethyldiethoxysilane, γ-aminopropyltrimethoxysilane, γ-aminopropylmethyldimethoxysilane, N-(β-aminoethyl)-γ-aminopropyltrimethoxysilane, N-(β-aminoethyl)-γ-aminopropyldimethoxysilane, N-(β-aminoethyl)-γ-aminopropyltriethoxysilane, N-(β-aminoethyl)-γ-aminopropylmethyldiethoxysilane, aminophenyltrimethoxysilane, aminophenyltriethoxysilane, aminophenylmethyldimethoxysilane or aminophenylmethyldiethoxysilane) or a silane coupling agent having an epoxy group (such as γ-glycidyloxypropyltrimethoxysilane, γ-glycidyloxypropylmethyldimethoxysilane, γ-glycidyloxypropyltriethoxysilane or γ-glycidyloxypropylmethyldiethoxysilane) may be exemplified as a particularly preferred one.

In a case where a fluoropolymer having a carboxy group preliminarily introduced to a side chain or at a terminal of the main chain, is used as the fluoropolymer, an alkoxysilane having an amino group or an epoxy group is particularly effective.

In a case where a fluoropolymer having an ester group preliminarily introduced to a side chain or at a terminal of the main chain is used as the fluoropolymer, an alkoxysilane having an amino group or an aminophenyl group is particularly effective.

In the above-mentioned aprotic fluorine-containing solvent, a trialkoxysilane having an amino group or an epoxy group is likely to undergo gelation or viscosity increase with time, as compared with a dialkoxysilane having a similar group. Further, a trialkoxysilane has a smaller solubility in an aprotic fluorine-containing solvent solution of the fluoropolymer, than the dialkoxysilane. Accordingly, in a case where a trialkoxysilane is used, it is preferred to add a protic fluorine-containing solvent, particularly a fluorinated alcohol.

In the case of a dialkoxysilane, although the solubility is not so small as a trialkoxysilane, it is possible to improve the solubility by likewise adding a protic fluorine-containing solvent, particularly a fluorinated alcohol. In the case of the dialkoxysilane, the viscosity increase with time of the composition is not so remarkable as the trialkoxysilane, and accordingly, it is not necessarily required to add a protic fluorine-containing solvent such as a fluorinated alcohol. However, it is preferred to add such a protic fluorine-containing solvent, whereby the viscosity increase can certainly be suppressed.

To the fluoropolymer composition, a protic fluorine-containing solvent may be incorporated. As mentioned above, when a protic fluorine-containing solvent is incorporated to the fluoropolymer composition, it is possible to increase the solubility of the silane coupling agent in the fluoropolymer composition. Further, it is possible to suppress gelation or an increase of the viscosity which is considered to be attributable to a reaction among the silane coupling agent.

As such a protic fluorine-containing solvent, the following ones may be exemplified.

A fluorinated alcohol such as trifluoroethanol, 2,2,3,3,3-pentafluoro-1-propanol, 2-(perfluorobutyl)ethanol, 2-(perfluorohexyl)ethanol, 2-(perfluorooctyl)ethanol, 2-(perfluorodecyl)ethanol, 2-(perfluoro-3-methylbutyl)ethanol, 2,2,3,3-tetrafluoro-1-propanol, 2,2,3,3,4,4,5,5-octafluoro-1-pentanol, 2,2,3,3,4,4,5,5,6,6,-dodecafluoro-1-heptanol, 2,2,3,3,4,4,5,5,6,6,7,7-hexadecafluoro-1-nonanol, 1,1,1,3,3,3-hexafluoro-2-propanol or 2,2,3,3,4,4-hexafluoro-1-butanol.

A fluorinated carboxylic acid such as trifluoroacetic acid, perfluoropropanoic acid, perfluorobutanoic acid, perfluoropentanoic acid, perfluorohexanoic acid, perfluoroheptanoic acid, perfluorooctanoic acid, perfluorononanoic acid, perfluorodecanoic acid, 1,1,2,2-tetrafluoropropanoic acid, 1,1,2,2,3,3,4,4-octafluoropentanoic acid, 1,1,2,2,3,3,4,4,5,5-dodecafluoroheptanoic acid or 1,1,2,2,3,3,4,4,5,5,6,6-hexadecafluorononanoic acid, amides of these fluorinated carboxylic acids, or a fluorinated sulfonic acid such as trifluoromethanesulfonic acid or heptadecafluorooctanesulfonic acid.

These protic fluorine-containing solvents may be used alone, or two or more of them may be used in combination.

The concentration of the fluoropolymer in the fluoropolymer composition is usually from 0.1 to 30 mass%, preferably from 0.5 to 20 mass%.

The amount of the silane coupling agent to be incorporated is usually from 0.01 to 50 parts by mass, preferably from 0.1 to 30 parts by mass, per 100 parts by mass of the fluoropolymer.

In a case where an aprotic fluorine-containing solvent and a protic fluorine-containing solvent are used in combination, the proportion of the protic fluorine-containing solvent based on the sum of the aprotic fluorine-containing solvent and the protic fluorine-containing solvent is preferably from 0.01 to 50 mass%, more preferably from 0.1 to 30 mass%.

Formation of a coating film by using the above fluoropolymer composition may be carried out, for example, by coating a substrate surface with the fluoropolymer composition, followed by drying by e.g. baking.

As the coating method, a conventional method may be used as a method for forming a film from a solution without any particularly limitation. Specific examples of such a method may, for example, be a roll coater method, a casting method, a dipping method, a spin coating method, a casting-on-water method, a Langmuir·Blodgett method, a die coating method, an ink jet method and a spray coating method. Further, a printing technique such as a relief printing method, a gravure printing method, a lithography method, a screen printing method or a flexo printing method may also be employed.

As a substrate to be coated with the above coating fluoropolymer composition, it is possible to employ a substrate which can be connected to earth when electric charge is injected to a coating film obtained by coating, without selecting the material. As a preferred material, a conductive metal such as gold, platinum, copper, aluminum, chromium or nickel may be mentioned. Further, a material other than a conductive metal, such as an insulating material such as an inorganic material of e.g. glass or an organic polymer material such as polyethylene terephthalate, polyimide, polycarbonate or an acrylic resin may also be used so long as it is one having its surface coated with a metal film by a method such as sputtering, vapor deposition or wet coating.

Further, a semiconductor material such as silicon may also be used so long as it is one having a similar surface treatment applied, or the ohmic value of the semiconductor material itself is low. The ohmic value of the substrate material is preferably at most 0.1 Ωcm, particularly preferably at most 0.01 Ωcm, by volume resistivity.

Such a substrate may be a flat plate having a smooth surface or one having convexoconcave formed thereon. Otherwise, it may have patterning applied in various shapes. Particularly in a case where the above-mentioned insulating substrate is employed, a pattern or convexoconcave may be formed on the insulating substrate itself, or a pattern or convexoconcave may be formed on a metal film coated on the surface. As a method for forming a pattern or convexoconcave on the substrate, a conventional method may be employed without any particular restriction. As the method for forming a pattern or convexoconcave, either a vacuum process or a wet process may be employed. As specific examples of such a method, a vacuum process may, for example, be a sputtering method via a mask or a vapor deposition method via a mask, and a wet process may, for example, be a roll coater method, a casting method, a dipping method, a spin coating method, a casting-on-water method, a Langmuir·Blodgett method, a die coating method, an ink jet method or a spray coating method. Otherwise, it is possible to employ a printing technique such as a relief printing method, a gravure printing method, a lithography method, a screen printing method or a flexo printing method. Further, as a method for forming a fine pattern or convexoconcave, a nanoimprinting method or a photolithography method may, for example, be employed.

The shape and size of the coating film may suitably be set depending upon the shape and the size of the desired electret. An electret is usually employed in the form of a film having a thickness of from 1 to 200 μm. It is particularly preferred that it is used in the form of a film having a thickness of from 10 to 20 μm, from the viewpoint of the processability and the properties as an electret.

As a method for injecting electric charge to the coating film, it is usually possible to employ any method so long as it is a method to charge an insulator. For example, it is possible to use a corona discharge method, an electron beam bombardment method, an ion beam bombardment method, a radiation method, a light irradiation method, a contact charging method or a liquid contact charging method, as disclosed in G.M. Sessler, Electrets Third Edition, pp. 20, Chapter 2.2, "Charging and Polarizing Methods" (Laplacian Press, 1998). Especially, for the electret of the present invention, it is preferred to employ a corona discharge method or an electron beam bombardment method.

Further, as a temperature condition at the time of injecting electric charge, it is preferred to carry out the injection at a temperature of at least the glass transition temperature of the fluoropolymer from the viewpoint of the stability of electric charge maintained after the injection, and it is particularly preferred to carry out the injection under a temperature condition of about the glass transition temperature + from 10 to 20°C. Further, the voltage to be applied at the time of injecting electric charge is preferably high so long as it is lower than the dielectric breakdown voltage of the fluoropolymer. To the fluoropolymer in the present invention, it is possible to apply a high voltage of from ±6 to ±30 kV, and it is particularly preferred to apply a voltage of from ±8 to ±15 kV. The fluoropolymer is capable of maintaining a negative electric charge more stably than a positive electric charge, and accordingly, it is further preferred to apply a voltage of

from -8 to -15 kV.

The electret of the present invention is suitable as an electrostatic induction conversion device to convert electric energy to kinetic energy.

Such an electrostatic induction conversion device may, for example, be a vibration-type power-generating unit, an actuator or a sensor. The structure of such an electrostatic induction conversion device may be the same as a conventional one except that as the electret, the electret of the present invention is used.

As compared with conventional electrets, the electret of the present invention has a high thermal stability of injected electric charge and is excellent in the charge-retention performance at a high temperature. Therefore, the electrostatic induction conversion device using such an electret has such characteristics that it is less likely to undergo deterioration of the performance, and the dependency of the performance on the environment is small.

EXAMPLES

Now, specific examples of the above-described embodiments will be described as Examples. However, it should be understood that the present invention is by no means restricted to the following Examples.

EXAMPLE 1: Production of electret A

In accordance with the procedure disclosed in Example 2 in Japanese Patent 3,053,657, perfluoro(butenyl vinyl ether) (hereinafter referred to as BVE) and perfluoro(2,2-dimethyl-1,3-dioxole) (hereinafter referred to as PDD) were polymerized to obtain a polymer a.

The infrared absorption (IR) spectrum of the polymer a was measured, and from the absorbance at 1,930 $cm^{-1}$, the repeating unit based on PDD (PDD content) contained in the polymer a was obtained and found to be 52 mol%. Further, the refractive index of the polymer a was measured by using an Abbe refractometer and found to be 1.317.

That is, the polymer a is a fluoropolymer having a structure comprising repeating units (a2-1) and (a2-2) and a repeating unit (b-2), wherein the ratio [(a2-1)+(a2-2)]/(b-2)=48/52 (mol ratio).

The polymer a was subjected to thermal treatment in air at 330°C for 5 hours and then immersed in water to obtain a polymer A.

The polymer A was subjected to differential scanning calorimetry (DSC), whereby the glass transition temperature (Tg) of the polymer A was 149°C.

Further, a film of the polymer A was prepared by a casting method, and the IR spectrum of the film was measured, whereby characteristic absorptions at 1,775 $cm^{-1}$ and 1,810 $cm^{-1}$ attributable to a -COOH group were observed, and thus it was confirmed that the polymer A had an acid group.

Further, the polymer A was dissolved in perfluoro(2-butyltetrahydrofuran) at a concentration of 0.5 mass%, and the intrinsic viscosity [$\eta$] of the solution (30°C) was measured by an Ubbelohde viscometer and found to be 0.36 dl/g.

Then, the polymer A was dissolved in perfluorotributylamine at a concentration of 11 mass% to obtain a polymer solution A.

The polymer solution A was applied by a spin coating method on a copper substrate of 3 cm $\times$ 3 cm having a thickness of 350 $\mu$m and dried by baking at 200°C to obtain a coating film having a thickness of 15 $\mu$m (hereinafter referred to as a coating film A).

To this coating film A, electric charge was injected by corona discharge to obtain an electret A. The injection of electric charge was carried out by using a corona charging equipment, of which a schematic construction diagram is shown in Fig. 1, by the following procedure under a condition of 160°C at a charging voltage of -8 kV for a charging time of 3 minutes. That is, by using a copper substrate (10) as an electrode, a high voltage of -8 kV was applied between a corona needle (14) and the copper substrate (10) by a DC high voltage power source (12) (HAR-20R5, manufactured by Matsusada Precision Inc.) to inject electric charge to the coating film A (11) formed on the copper substrate (10).

In this corona charging equipment, negative ions discharged from the corona needle (14) are homogenized by a grid (16) and then showered down on the coating film A (11), whereby electric charge is injected. Here, to the grid (16) a voltage of -600 V is applied from the power source (18) for grid.

EXAMPLE 2: Production of electret B

In accordance with the procedure disclosed in Example 1 in WO01/92194, $CF_2=CFCF_2CF(CF_3)OCF=CF_2$ was polymerized to obtain a polymer b. The refractive index of the polymer b was measured by using an Abbe refractometer and found to be 1.327. The polymer b is a fluoropolymer having a structure composed solely of the repeating unit (a1), wherein in the unit (a1), each of $X^{11}$, $X^{12}$ and $X^{13}$ is a fluorine atom, and $X^{14}$ is a trifluoromethyl group, and f=1.

The polymer b was subjected to thermal treatment in air at 330°C for 5 hours and then immersed in water to obtain a polymer B.

The polymer B was subjected to DSC, whereby Tg of the polymer B was 124°C. Further, a film of the polymer B was prepared by a casting method, and the IR spectrum of the formed film was measured, whereby characteristic absorptions at 1,775 $cm^{-1}$ and 1,810 $cm^{-1}$ attributable to a -COOH group were observed, and it was confirmed that the polymer B had an acid group.

Further, the polymer B was dissolved in perfluoro(2-butyltetrahydrofuran) at a concentration of 0.5 mass%, and the intrinsic viscosity [η] of the solution (30°C) was measured by an Ubbelohde viscometer and found to be 0.41 dl/g.

Then, the polymer B was dissolved in perfluorotributylamine at a concentration of 16 mass% to obtain a polymer solution B.

The polymer solution B was applied by a spin coating method on a copper substrate of 3 cm × 3 cm having a thickness of 350 μm and then dried by baking at 200°C to obtain a coating film having a thickness of 15 μm (hereinafter referred to as a coating film B).

Electric charge was injected by the same procedure as in Example 1 except that the temperature at the time of injecting electric charge to the coating film B was changed to 136°C, to obtain an electret B.

EXAMPLE 3: Production of electret C

In accordance with the procedure disclosed in Examples 5 and 15 in U.S. Patent No. 5,326,917, a polymer of $CF_2=CFCF_2CH_2OCF=CF_2$ was chlorinated by chlorine gas to obtain a polymer c.

The refractive index of the polymer c was measured by using an Abbe refractometer and found to be 1.40. The polymer c is a fluoropolymer having a structure composed solely of the repeating unit (a1), wherein in the unit (a1), $X^{11}$ and $X^{12}$ are fluorine atoms, and $X^{13}$ and $X^{14}$ are chlorine atoms, and f=1.

The polymer c was subjected to thermal treatment in air at 330°C for 5 hours to obtain a polymer C. The polymer C was subjected to DSC, whereby Tg of the polymer C was 157°C.

Then, the polymer C was dissolved in hexafluorobenzene at a concentration of 8 mass% to obtain a polymer solution C.

The polymer solution C was applied by a casting method on a copper substrate of 3 cm × 3 cm having a thickness of 350 μm and then dried by baking at 200°C to obtain a coating film having a thickness of 15 μm (hereinafter referred to as a coating film C).

Electric charge was injected by the same procedure as in Example 1 except that the temperature at the time of injecting electric charge to the coating film C was changed to 170°C, to obtain an electret C.

COMPARATIVE EXAMPLE 1: Production of electret D

In accordance with Preparation Examples 2 to 4 in JP-A-4-189880 except that the charged amount of diisopropylperoxy dicarbonate was changed to 150 mg, $CF_2=CFCF_2CF_2OCF=CF_2$ was polymerized to obtain a polymer D. Here, the intrinsic viscosity [η] of a perfluoro(2-butyltetrahydrofuran) solution of the polymer D (30°C) was measured by an Ubbelohde viscometer and found to be 0.24 dl/g. The obtained polymer D was subjected to thermal treatment and dipping treatment in water, and then, formed into a perfluorotributylamine solution (concentration: 9 mass%), which was applied by a spin coating method on a copper substrate of 3 cm × 3 cm having a thickness of 350 μm and then dried by baking at 200°C to obtain a coating film having a thickness of 15 μm (hereinafter referred to as a coating film D).

Electric charge was injected by the same procedure as in Example 1 except that the temperature at the time of injecting electric charge to the coating film D was changed to 120°C, to obtain an electret D.

Further, with respect to the polymer D, Tg was measured by DSC and found to be 108°C. Here, the polymer D is a fluoropolymer having a structure composed solely of the repeating units (a2-1) and (a2-2).

EXAMPLE 4: Production of electret E

A polymer solution A was prepared in the same manner as in Example 1, and to 77 g of the polymer solution A, 4.2 g of 2-(perfluorohexyl)ethanol and 14 g of perfluorotributylamine were added, and further, 0.3 g of γ-aminopropylmethyldiethoxysilane was added and mixed, to obtain a uniform polymer solution E.

The polymer solution E was applied by a spin coating method on a copper substrate of 3 cm × 3 cm having a thickness of 350 μm and then dried by baking at 200°C to obtain a coating film having a thickness of 15 μm (hereinafter referred to as a coating film E).

Electric charge was injected to the coating film E by the same procedure as in Example 1 to obtain an electret E. The electret E had a high surface potential both at the initial stage and after expiration of 400 hours and thus had an excellent electric charge-retention performance at least equal to the electret A. Further, by the measurement by the after-mentioned Thermal Stimulated Discharge method, it was found to be at least equal to the electret A also with respect to the discharge initiation temperature and the discharge peak temperature.

EXAMPLE 5: Production of electret F

In accordance with the procedure disclosed in Example 1 in JP-B-43-29154, perfluoro(2-methylene-4-methyl-1,3-dioxolane) was polymerized to obtain a polymer f. The refractive index of the polymer f was measured by using an Abbe refractometer and found to be 1.330. The polymer f is a fluoropolymer having a structure composed solely of the repeating unit (c), wherein in the unit (c), $Z^1$ and $Z^2$. are fluorine atoms, $Z^3$ is a trifluoromethyl group, and $Z^4$ is a fluorine atom.

The polymer f was subjected to thermal treatment in air at 330°C for 5 hours and then immersed in water to obtain a polymer F.

With respect to the polymer F, DSC was carried out, whereby Tg of the polymer F was 131°C. Further, a film of the polymer F was prepared by a casting method, and the IR spectrum of the formed film was measured, whereby characteristic absorptions at 1,775 $cm^{-1}$ and 1,810 $cm^{-1}$ attributable to a -COOH group, were observed, and it was confirmed that the polymer F had an acid group.

Further, the polymer F was dissolved in perfluoro(2-butyltetrahydrofuran) at a concentration of 0.5 mass%, and the intrinsic viscosity [η] of the solution (30°C) was measured by an Ubbelohde viscometer and found to be 0.54 dl/g.

Then, the polymer F was dissolved in perfluorotributylamine at a concentration of 8 mass% to obtain a polymer solution F.

The polymer solution F was applied by a casting method on a copper substrate of 3 cm × 3 cm having a thickness of 350 μm and then dried by baking at 200°C to obtain a coating film having a thickness of 15 μm (hereinafter referred to as a coating film F).

Electric charge was injected by the same procedure as in Example 1 except that the temperature at the time of injecting electric charge to the coating film F was changed to 142°C, to obtain an electret F.

TEST EXAMPLE 1: Charging test

With respect to the electrets A, B, C, D and F obtained as described above, charging tests were carried out by the following procedure.

The electrets A, B, C, D and F immediately after injecting electric charge by corona charging under conditions of a charging voltage of -8 kV and a charging time of 3 minutes, were, respectively, returned to room temperature (25°C), and their surface potentials (initial surface potentials) were measured. Further, the respective electrets were stored for 400 hours under conditions of 20°C and 60% RH and then returned to room temperature, and their surface potentials (surface potentials after 400 hours) were measured.

The surface potential (V) was obtained by measuring surface potentials at 9 measuring points (set in a lattice arrangement for every 3 mm from the center of the film, as shown in Fig. 2) of each electret by using a surface potentiometer (model 279, manufactured by Monroe Electronics Inc.), and taking their average value. The results are shown in Table 1.

TEST EXAMPLE 2: Thermal stability test

With respect to the above electrets A, B, C, D and F, thermal stability tests were carried out by the following procedure by using an equipment, of which a schematic diagram is shown in Fig. 3.

Firstly, as shown in Fig. 3, a counter electrode 20 was disposed to face an electret 21 (electret A, B, C, D or F) on a copper substrate 10.

Then, the temperature at the portion shown by dashed lines in Fig. 3 was raised at a constant rate (1 °C/min) by heating by means of a heater, and the amount of electric charge discharged from each electret A, B, C, D or F was measured as a current value i flowing from the counter electrode 20 by an ammeter 22 (a fine ammeter (Mode 16517A, manufactured by Keithley)), and the discharge initiation temperature and the discharge peak temperature were obtained. The results are shown in Table 1.

Here, the discharge peak temperature represents a temperature at which the current value detected at the time of the discharge becomes maximum, and the discharge initiation temperature represents a temperature at the time when the current value obtained by the following formula (the current value at the initiation of the discharge) was detected by the ammeter 22.

Current value at the initiation of the discharge=

{(current value at the discharge peak temperature)-

(current value before the discharge)}×0.1+(current value before the discharge)

The above thermal stability test is a method so-called a Thermal Stimulated Discharge method (hereinafter referred to as a TSD method). In this method, a capacitor will be formed by the electret 21 and the counter electrode 20. Accordingly, when the electret 21 is heated, the electric charge trapped in the film tends to be unstable, and if electric charge in the vicinity of the surface diminishes by e.g. diffusion, the electric charge stored in the counter electrode 20 will also decrease. Thus, by measuring the electric current value flowing from the counter electrode 20, the thermal stability of each electret A, B, C, D or F can be evaluated.

TABLE 1

| Electret | | A | B | C | D | F |
|---|---|---|---|---|---|---|
| Tg of polymer (°C) | | 149 | 124 | 157 | 108 | 131 |
| Film-forming method | | Spin coating method | Spin coating method | Casting method | Spin coating method | Casting method |
| Surface potential (V) | Initial | 1084 | 863 | 652 | 836 | 1079 |
| | After 400 hours | 918 | 818 | 716 | 766 | 800 |
| Discharge initiation temperature (°C) | | 149 | 135 | 148 | 115 | 118 |
| Discharge peak temperature (°C) | | 178 | 182 | 167 | 144 | 163 |

As shown in Table 1, each of electrets A, B, C and F had higher discharge initiation temperature and discharge peak temperature, thus showing an improvement in the thermal stability of injected electric charge, as compared with electret D.

Further, with respect to the surface potential, when electrets A, B and F were compared with electret D, it was confirmed that as compared with electret D, electrets A, B and F had high surface potentials both at the initial stage and after 400 hours and thus had excellent electric charge-retention performance.

INDUSTRIAL APPLICABILITY

As compared with conventional electrets, the electret of the present invention has a high thermal stability of injected electric charge and is excellent in the electric charge-retention performance at a high temperature. Therefore, an electrostatic induction conversion device using such an electret is useful, since deterioration in the performance scarcely occurs, and the dependency of the performance on the environment is small.

The entire disclosure of Japanese Patent Application No. 2008-041379 filed on February 22, 2008 including specification, claims, drawings and summary is incorporated herein by reference in its entirety.

## Claims

1. An electret containing a fluoropolymer which comprises at least one repeating unit selected from the group consisting of a repeating unit represented by the following formula (a), a repeating unit represented by the following formula (b) and a repeating unit represented by the following formula (c), in a total amount of at least 80 mol% based on all repeating units, and which has a glass transition temperature of from 110 to 350°C:

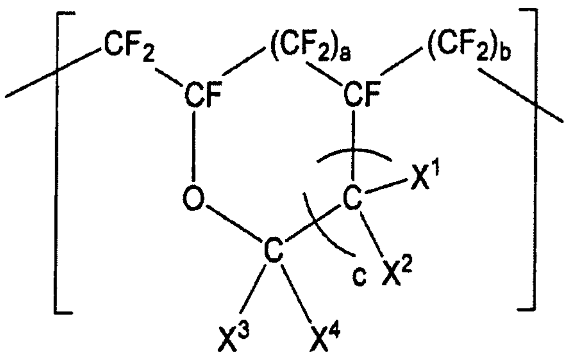

... (a)

wherein each of $X^1$ to $X^4$ which are independent of one another, is a fluorine atom, a chlorine atom, a fluorinated alkyl group or a fluorinated alkoxy group; one of a and b is 0 and the other is 1, and a+b=1; and c is an integer of from 0 to 3; provided that when $X^1$ and $X^2$ are, respectively, present in plurality, such a plurality of $X^1$ and a plurality of $X^2$ may, respectively, be the same or different;

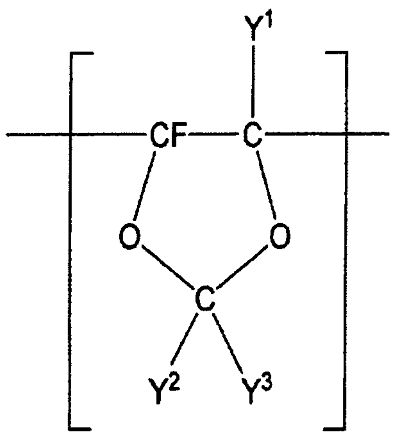

... (b)

wherein each of $Y^1$ to $Y^3$ which are independent of one another, is a fluorine atom, a chlorine atom, a fluorinated alkyl group or a fluorinated alkoxy group, provided that $Y^2$ and $Y^3$ may be bonded to each other to form a fluorinated alicyclic ring;

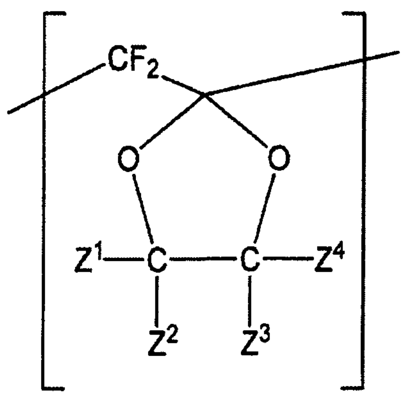

... (c)

wherein each of $Z^1$ to $Z^4$ which are independent of one another, is a fluorine atom, a chlorine atom, a fluorinated

alkyl group or a fluorinated alkoxy group.

**2.** An electret containing a fluoropolymer which comprises at least one repeating unit selected from the group consisting of a repeating unit represented by the following formula (a1), a repeating unit represented by the following formula (b) and a repeating unit represented by the following formula (c), in a total amount of at least 80 mol% based on all repeating units:

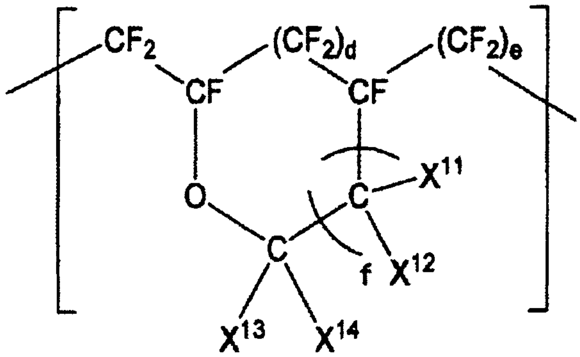

... (a 1)

wherein each of $X^{11}$ to $X^{14}$ which are independent of one another, is a fluorine atom, a chlorine atom, a fluorinated alkyl group or a fluorinated alkoxy group, provided that at least one of $X^{11}$ to $X^{14}$ is a chlorine atom, a fluorinated alkyl group or a fluorinated alkoxy group; one of d and e is 0 and the other is 1; and f is an integer of from 0 to 3; provided that when $X^{11}$ and $X^{12}$ are, respectively, present in plurality, such a plurality of $X^{11}$ and a plurality of $X^{12}$ may, respectively, be the same or different;

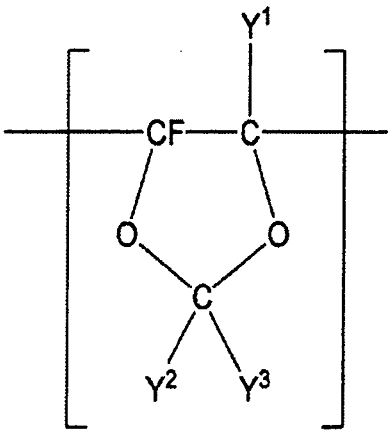

... (b)

wherein each of $Y^1$ to $Y^3$ which are independent of one another, is a fluorine atom, a chlorine atom, a fluorinated alkyl group or a fluorinated alkoxy group, provided that $Y^2$ and $Y^3$ may be bonded to each other to form a fluorinated alicyclic ring;

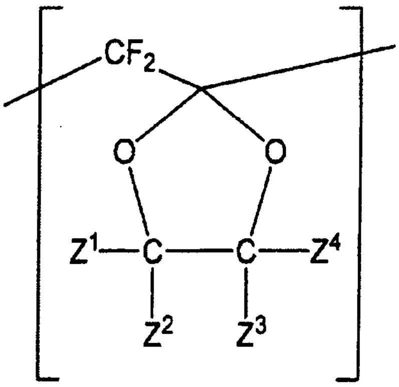

... (c)

wherein each of $Z^1$ to $Z^4$ which are independent of one another, is a fluorine atom, a chlorine atom, a fluorinated alkyl group or a fluorinated alkoxy group.

3. An electret containing a fluoropolymer which comprises a repeating unit represented by the following formula (a2), and a repeating unit represented by the following formula (b) and/or a repeating unit represented by the following formula (c), wherein the total amount of the repeating unit represented by the formula (b) and the repeating unit represented by the formula (c) is at least 2 mol% based on all repeating units:

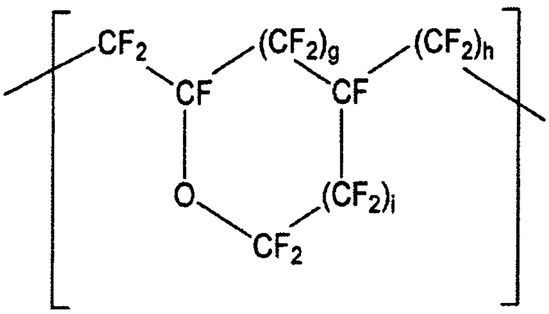

... (a 2)

wherein one of g and h is 0 and the other is 1; and i is an integer of from 0 to 3;

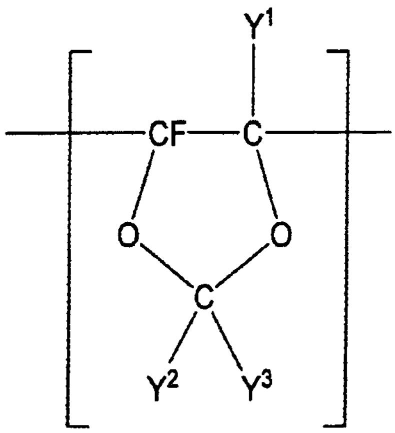

... (b)

wherein each of $Y^1$ to $Y^3$ which are independent of one another, is a fluorine atom, a chlorine atom, a fluorinated

alkyl group or a fluorinated alkoxy group, provided that $Y^2$ and $Y^3$ may be bonded to each other to form a fluorinated alicyclic ring;

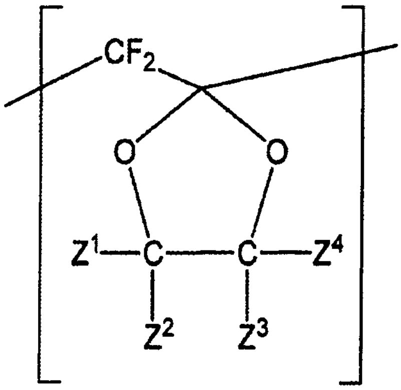

··· (c)

wherein each of $Z^1$ to $Z^4$ which are independent of one another, is a fluorine atom, a chlorine atom, a fluorinated alkyl group or a fluorinated alkoxy group.

**4.** The electret according to Claim 1, wherein the fluoropolymer is a copolymer comprising the repeating unit (a) and the repeating unit (b), wherein in the unit (a), each of $X^1$ to $X^4$ is a fluorine atom, and in the unit (b), $Y^1$ is a fluorine atom and each of $Y^2$ and $Y^3$ is a trifluoromethyl group.

**5.** The electret according to Claim 2, wherein the fluoropolymer is a polymer containing only the repeating unit represented by the formula (a1).

**6.** The electret according to Claim 5, wherein the fluoropolymer is such that in the formula (a1), each of $X^{11}$ and $X^{12}$ is a fluorine atom, and each of $X^{13}$ and $X^{14}$ is a chlorine atom, or each of $X^{11}$, $X^{12}$ and $X^{13}$ is a fluorine atom and $X^{14}$ is a chlorine atom.

**7.** The electret according to Claim 5, wherein the fluoropolymer is such that in the formula (a1), $X^{11}$ is a fluorine atom, $X^{12}$ is a trifluoromethyl group and each of $X^{13}$ and $X^{14}$ is a fluorine atom, or each of $X^{11}$, $X^{12}$ and $X^{13}$ is a fluorine atom and $X^{14}$ is a trifluoromethyl group.

**8.** The electret according to Claim 3, wherein the fluoropolymer is a copolymer comprising the repeating unit represented by the formula (a2) and the repeating unit represented by the formula (b).

**9.** The electret according to any one of Claims 1 to 7, which is a coating film.

**10.** An electrostatic induction conversion device comprising the electret as defined in any one of Claims 1 to 9.

Fig. 1

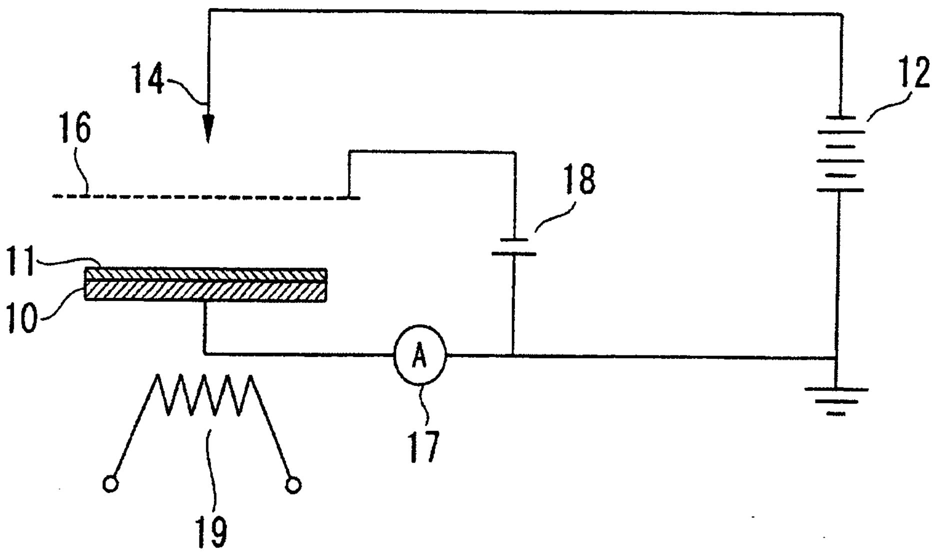


Fig. 2

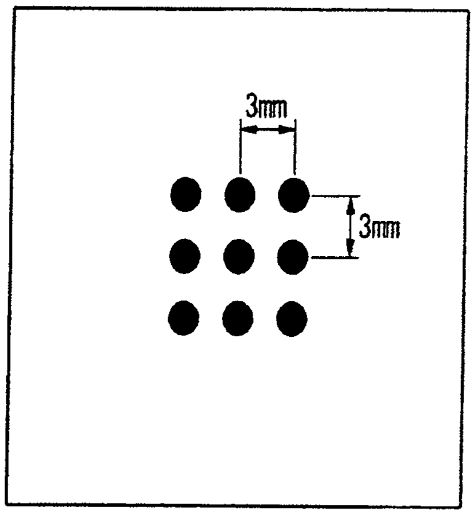

Fig. 3

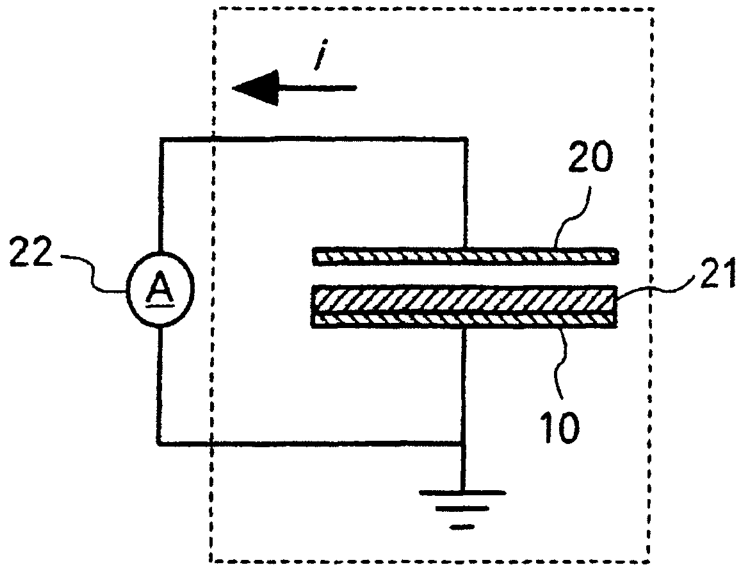

## INTERNATIONAL SEARCH REPORT

International application No.
PCT/JP2009/052932

A. CLASSIFICATION OF SUBJECT MATTER
*H01G7/02*(2006.01)i, *C08F16/32*(2006.01)i

According to International Patent Classification (IPC) or to both national classification and IPC

B. FIELDS SEARCHED

Minimum documentation searched (classification system followed by classification symbols)
H01G7/02, C08F16/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-312551 A (The University of Tokyo),<br>29 November, 2007 (29.11.07),<br>Par. Nos. [0033] to [0038]<br>(Family: none) | 1-4,8-10<br>5-7 |
| A | US 2005/0009944 A1 (AUSIMONT S.p.A.),<br>13 January, 2005 (13.01.05),<br>Full text<br>(Family: none) | 5-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 May, 2009 (13.05.09) | Date of mailing of the international search report<br>26 May, 2009 (26.05.09) |
| Name and mailing address of the ISA/<br>Japanese Patent Office<br><br>Facsimile No. | Authorized officer<br><br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006180450 A
- WO 05054336 A
- WO 03037838 A
- WO 0192194 A
- JP 2003040938 A
- JP 2001302725 A
- JP 4346957 A
- JP 4346989 A
- US 5260492 A
- US 5326917 A
- US 5350821 A
- JP 4329154 A
- JP 3053657 B
- JP 4189880 A
- US 3481815 A
- JP 4329154 B
- JP 2008041379 A


### Non-patent literature cited in the description


- Charging and Polarizing Methods. **G.M. Sessler.** Electrets. Laplacian Press, 1998, 20